# FASCICULE DE BREVET EUROPEEN

(11) **EP 1 965 559 B1**
(45) Date de publication et mention de la délivrance du brevet: **09.07.2014**
(21) Numéro de dépôt: 07301714.7
(22) Date de dépôt: 20.12.2007
(51) Int. Cl.: H04W 12/02, H04W 12/06, H04L 12/24, H04L 29/06

(54) **Procédé de sécurisation d'un flux de données**
Sicherungsverfahren eines Datenflusses
Method for securing a data flow

(30) Priorité: 29.12.2006 FR 0656064
(43) Date de publication de la demande: 03.09.2008
(73) Titulaire: Société Française du Radiotéléphone, 75008 Paris (FR)
(72) Inventeur: WARY, Jean-Philippe, 92340, BOURG LA REINE (FR)
(74) Mandataire: Schmit, Christian Norbert Marie

(56) Documents cités:
- EP-A- 1 376 930
- WO-A-03/007184
- US-A1- 2004 029 562
- BURNSIDE M ET AL: "Proxy-based security protocols in networked mobile devices" PROC ACM SYMP APPL COMPUTING; PROCEEDINGS OF THE ACM SYMPOSIUM ON APPLIED COMPUTING 2002, [Online] 2002, pages 265-272, XP002453789 Extrait de l'Internet: URL:http://doi.acm.org/10.1145/508791.5088 45> [extrait le 2007-10-04]
- PASHALIDIS ANDREAS: "A cautionary note on automatic proxy configuration" PROC. IASTED INT. CONF. COMMUN. NETW. INF. SECUR.; PROCEEDINGS OF THE IASTED INTERNATIONAL CONFERENCE ON COMMUNICATION, NETWORK, AND INFORMATION SECURITY; PROCEEDINGS OF THE IASTED INTERNATIONAL CONFERENCE ON COMMUNICATION, NETWORK, AND INFORMATION S, [Online] 2003, pages 153-158, XP002453790 Extrait de l'Internet: URL:http://citeseer.ist.psu.edu/cache/pape rs/cs/31075/http:zSzzSzwww.isg.rhul.ac.ukz Sz~xrtczSzcvzSzproxy.pdf/pashalidis03cauti onary.pdf> [extrait le 2007-10-04]

## Description

L'invention a pour objet un procédé de sécurisation d'un flux de données.

Le domaine de l'invention est celui des terminaux électroniques de traitement. Plus particulièrement le domaine de l'invention est celui des terminaux mobiles intelligents.

Ici par terminal mobile intelligent on entend un téléphone mobile de deuxième génération ou d'une génération supérieure à la deuxième. Par extension un terminal mobile est tout dispositif communiquant via un réseau et transportable sans assistance par un être humain. Dans cette catégorie on inclut donc au moins les téléphones mobiles, les assistants personnels et les ordinateurs portables. Ces terminaux intelligents sont capables de mettre en oeuvre n'importe quelle utilisation. L'illustration préférée de l'invention sera dans la suite de la description réalisée au moyen de téléphones mobiles. Le terme terminal correspondra donc par la suite à un téléphone mobile tout en gardant présente à l'esprit la définition précédente.

Un but de l'invention est de sécuriser les communications effectuées par un terminal. Un autre but de l'invention est de rendre facile et sûre la gestion de la sécurité des communications d'un terminal.

Un autre but de l'invention est de pouvoir facilement déléguer la gestion de la sécurité des communications d'une flotte de terminaux à un gestionnaire de flotte, tout en permettant à celui-ci de positionner des éléments au niveau de chaque terminal de sa flotte ou pour un ensemble de terminaux de sa flotte et uniquement de celle-ci.

Dans l'état de la technique il n'existe aucun moyen de gérer simplement la sécurité des communications d'un terminal ou d'une flotte de terminaux. Une fois un terminal lâché dans la nature il est à la merci des actions de son utilisateur.

Dans l'invention on résout ce problème en implantant un serveur mandataire local sur le terminal. Ce serveur mandataire traite au moins un flux entrant ou sortant du terminal en appliquant à ce flux des traitements prévus par une mémoire de configuration du serveur mandataire, ces traitements étant réalisés par un ou plusieurs applicatifs spécifiques. Il est donc ainsi possible de sécuriser ces flux, par exemple en les chiffrant ou en analysant leur contenu au niveau syntaxique, sémantique, voire de rechercher des occurrences de motifs binaires ou signatures de code malicieux pour prévenir les interceptions ou les intrusions.

Dans un variante de l'invention, ce serveur mandataire peut aussi sécuriser les flux de données entre les différents composants du terminal, que ces composants soient logiciel (comme un logiciel de visualisation d'une vidéo ou un éditeur de texte) ou matériel (un composant mémoire pouvant être identifié par une plage d'adresse physique, ou au travers d'une plage d'adresse physique et d'un système d'adressage de type interruption ou élément d'indexation), d'une façon générale toute typologie de composants pouvant être identifiés ou indexés par le système d'exploitation du terminal. Ce serveur mandataire sécurise les flux en autorisant ou non la recopie, le déplacement, voire les accès en lecture, écriture, réécriture à tout ou partie d'une donnée, d'un fichier de données ou d'un ensemble de fichiers binaires pouvant correspondre à un logiciel ou en ensemble de logiciels, voire tout ou partie d'un système d'exploitation. Ce serveur mandataire a aussi dans une variante de l'invention la responsabilité du stockage sécurisé ou non de ces données ou fichiers de données dans le terminal et peut imposer l'usage d'outils cryptographiques et ou d'encodage / compression.

Dans une variante de l'invention le serveur mandataire et sa mémoire de configuration sont enregistrés sur une carte microcircuit et sont sécurisés pour garantir que la mémoire de configuration n'est pas altérée.

Dans l'invention on entend par protocole le sens commun de celui-ci à savoir ce qui est utilisé pour communiquer sur une même couche d'abstraction entre deux machines différentes, par extension de ce sens le terme protocole est aussi utilisé pour désigner les règles de communication établies entre deux couches sur un même terminal ou entre un terminal et une carte à microcircuit. Dans l'invention le mot "protocole" s'applique indifféremment à une suite de protocoles entre diverses couches de communications (une pile de protocole dans le sens commun) et aux logiciels qui implémentent lesdits protocoles. Dans un mode de réalisation préféré mais non restrictif de l'invention, le mot protocole englobe les piles TCP/IP, IPv4, IPv6, IPsec, SIGTRAN, l'ensemble des services de niveau 2, 3, 4 , 5 et plus de ces couches, on peut citer de façon indicative et non limitative les protocoles connus suivants à titre d'illustration du propos : MPLS, PPP, ATM, IP, ARP, ICMP, BGP, OSPF, L2TP, RTP, SRTP, SCTP, TCP, UDP, TCAP, FTP, IRC, SSH, SSL et TSL, HTTP, IMAP, POP3, SMTP, Telnet, SIP, H323. Dans ce mode de réalisation préféré, les protocoles du monde IP sont souvent techniquement identifiés par le numéro du port de destination.

L'invention a donc pour objet un procédé de sécurisation d'un flux de données émis par un terminal(101) électronique, la sécurisation étant obtenue via un serveur mandataire(115) hébergé et mis en oeuvre dans une carte à microcircuit insérée dans le terminal électronique, caractérisé en ce que le procédé comporte les étapes suivantes mises en oeuvre par le terminal:
- il enregistre (201) une configuration d'un serveur mandataire dans une mémoire de configuration de la carte à microcircuit dont les droits de mise à jour de la mémoire de configuration d'un ensemble de terminaux ou flotte de terminaux sont dédiés à une unique entité, le gestionnaire de flotte, de façon exclusive entre flottes de terminaux,
- il enregistre (202) dans une mémoire de configuration de protocoles un paramètre forçant l'utilisation du serveur mandataire pour chaque flux de données d'au moins un protocole,
- il applique (204-206) pour chaque flux de données de chaque protocole paramétré pour être soumis au serveur mandataire le traitement prévu pour le flux par la configuration du serveur mandataire.

Dans une variante le procédé selon l'invention est également caractérisé en ce que le traitement prévu est réalisé par un applicatif spécifique dédié.

Dans une variante le procédé selon l'invention est également caractérisé en ce que le traitement prévu est réalisé par un serveur spécialisé en relation avec le serveur mandataire.

Dans une variante le procédé selon l'invention est également caractérisé en ce que la mémoire de configuration est mise à jour via une étape (213) de mise à jour suivant une étape de connexion à distance sur le terminal comportant la mémoire de configuration.

Dans une variante le procédé selon l'invention est également caractérisé en ce que la mémoire de configuration est mise à jour via une étape (213) de mise à jour suivant une étape de connexion en local sur le terminal comportant la mémoire de configuration, cette étape de connexion pouvant nécessiter une phase d'authentification de l'utilisateur.

Dans une variante le procédé selon l'invention est également caractérisé en ce qu'une étape d'écriture dans la mémoire de configuration, est conditionnée par la validation d'une étape (212) de vérification des droits de l'émetteur d'une requête de mise à jour de la mémoire de configuration.

Dans une variante le procédé selon l'invention est également caractérisé en ce que les applicatifs en charge des traitements prévus pour chacun des flux identifiés par la configuration du serveur mandataire sont mis à jour selon les mêmes procédés que ceux mis en place pour la mise à jour de la mémoire de configuration, cette mise à jour pouvant se limiter au téléchargement de clés cryptographiques en technologie symétrique ou asymétrique nécessaire au fonctionnement dudit applicatif.

Dans une variante le procédé selon l'invention est également caractérisé en ce que le serveur mandataire est mis en oeuvre par une carte à microcircuit insérée dans le terminal électronique.

Dans une variante le procédé selon l'invention est également caractérisé en ce que le traitement prévu pour chacun des flux de données de chaque protocole paramétré prend en compte les informations relatives à l'heure d'usage

Dans une variante le procédé selon l'invention est également caractérisé en ce que le traitement prévu pour chacun des flux de données de chaque protocole paramétré prend en compte la connaissance de la géolocalisation du terminal

Dans une variante le procédé selon l'invention est également caractérisé en ce que le traitement prévu pour chacun des flux de données de chaque protocole paramétré prend en compte les informations relatives aux derniers flux traités

Dans une variante le procédé selon l'invention est également caractérisé en ce que les applicatifs spécifiques dédiés au traitement prévu peuvent être téléchargés dans la carte à microcircuit ou activés s'ils y sont déjà résidents.

Dans une variante le procédé selon l'invention est également caractérisé en ce qu'il existe une configuration de sécurité par défaut qui est appliquée à tout nouveau terminal de la flotte ne comportant pas de configuration spécifique.

L'invention sera mieux comprise à la lecture de la description qui suit et à l'examen des figures qui l'accompagnent. Celles-ci sont présentées à titre indicatif et nullement limitatif de l'invention. Les figures montrent :
Figure 1: une illustration de moyens sur lesquels l'invention est mise en oeuvre,
Figure 2 : une illustration d'étapes du procédé selon l'invention.

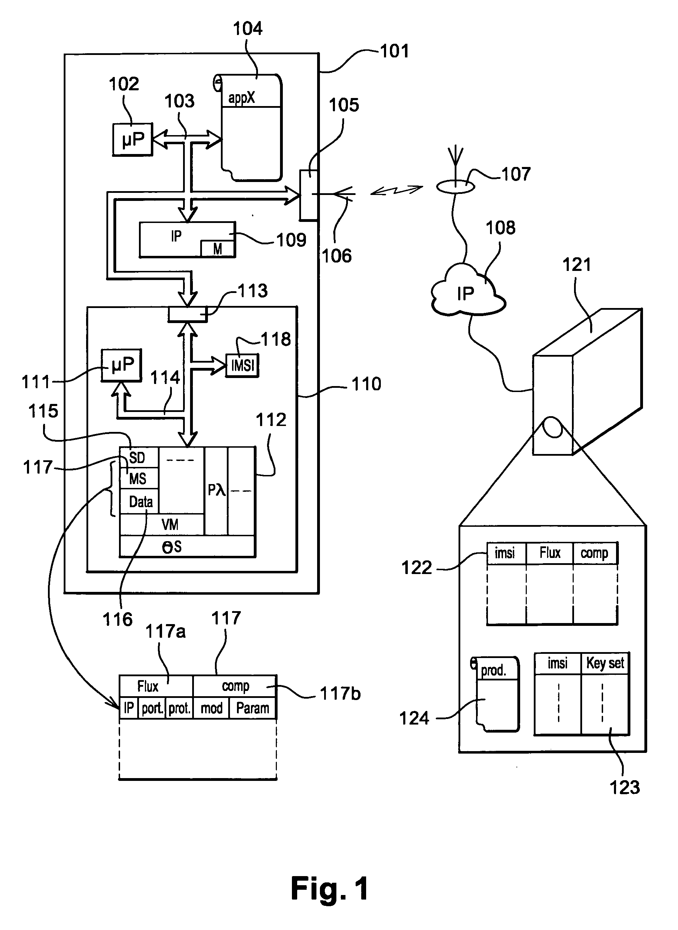

La figure 1 montre un terminal 101 mobile. On considère pour la description, à titre d'exemple, que le terminal 101 est un téléphone mobile.

Le terminal 101 comporte un microprocesseur 102 connecté via un bus 103 à une mémoire 104 de programmes.

Dans cette description lorsque l'on prête une action à un dispositif cette action est en fait réalisée par un microprocesseur du dispositif commandé par des codes instruction enregistrés dans une mémoire de programme du dispositif. De la même manière, lorsque l'on prête une action à une application/programme, celle-ci correspond en fait à une série de codes instruction enregistrés dans une mémoire de programme du dispositif mettant en oeuvre l'application, cette série de codes instruction étant mise en oeuvre par un microprocesseur dudit dispositif.

Le terminal 101 comporte aussi des circuits 105 interfaces entre le bus 103 et une antenne 106. Les circuits 105 réalisent la conversion entre les signaux du bus 103 et les signaux reçus/émis via l'antenne 106. Ces circuits sont donc une interface radioélectrique permettant au terminal 101 de communiquer sur un réseau de téléphonie mobile matérialisé par une station 107 de base. Via ces circuits 105 et le réseau 107 de téléphonie mobile, le terminal 101 est donc apte à communiquer sur un réseau 108 de type Internet et donc apte à atteindre ou être atteint par n'importe quel serveur ou terminal connecté à ce réseau 108.

Le terminal 101 comporte aussi une mémoire 109 de configuration réseau et plus particulièrement ici de configuration des communications TCP/IP. Cette configuration comporte au moins un paramètre M indiquant s'il faut utiliser une passerelle pour les flux entrant/sortant du téléphone. Dans le cas de l'invention, le paramètre M vaut l'adresse IP du serveur mandataire, ou proxy, selon l'invention cette adresse est de façon avantageuse l'adresse IP locale (localhost), c'est-à-dire pour le protocole IPV4 : 127.0.0.1 ou l'adresse éthernet virtuelle (loopback) dans le cas du protocole éthernet Cela signifie que tous les flux entrants/sortants seront traités par le serveur mandataire selon l'invention.

Cette passerelle peut aussi être identifiée par un nommage spécifique, traité directement par la pile IP dudit téléphone lors de la résolution des noms, par exemple l'usage d'un préfixe de type "sc." ou "cartesim." en lieu et place du "www" couramment utilisé pour les navigations («browsing ») sur le web. A titre d'exemple, le fait de saisir l'adresse "cartesim.sfr.fr" ou "cartesim.www.sfr.fr" au lieu "www.sfr.fr" permet de signifier à la pile IP du terminal que l'on souhaite accéder au site www.sfr.fr au travers du serveur mandataire local identifié au niveau du fichier de configuration du mobile par le préfixe "cartesim". Dans ce cas, la requête est directement émise vers le serveur mandataire local. Cette technique de nommage permet, dans une variante de l'invention, d'adresser plusieurs serveurs mandataires au niveau du téléphone, chacun étant pourvu de son propre fichier de configuration et/ou serveurs et applicatifs dédiés pour les traitements spécifiques à appliquer au flux transféré.

Ici on aura compris qu'un serveur mandataire est en fait un programme mis en oeuvre par un microprocesseur du terminal 101. La figure 1 montre encore que le terminal 101 comporte une carte 110 microcircuit. La carte 110 microcircuit comporte un microprocesseur 111, une mémoire 112 de programmes et des circuits 113 interface avec le bus 103. Les éléments 111 à 113 sont interconnectés via un bus 114.

La mémoire 112 est structurée en couches de manière à permettre une isolation des applications mises en oeuvre par le microprocesseur 111.

Une telle architecture est, par exemple, purement logicielle mettant en oeuvre le concept de domaines de sécurité. Un domaine de sécurité est défini au niveau du système d'exploitation du téléphone mobile, ou d'une surcouche du système d'exploitation. Une telle surcouche est, par exemple, une machine virtuelle de type java, voire le système multiapplicatif pour cartes à puce GlobalPlatform (www.globalplatform.org).

Le domaine de sécurité comporte au moins une zone mémoire divisée en une zone de programmes et une zone de données. Les mécanismes du système d'exploitation ou de la surcouche, garantissent que les codes instructions de la zone de programmes d'un domaine de sécurité ne peuvent accéder qu'aux données de la zone de données dudit domaine de sécurité. Cet accès au domaine de sécurité est de plus protégé par un ensemble de clés. Il existe ainsi plusieurs clés associées à un domaine de sécurité. Ainsi le domaine de la technique introduit la notion de jeu de clés ("keyset") qui participe à la protection du domaine de sécurité, chacune de ces clés est dédiée à un rôle ou une fonction sécurité très précise, suivant les besoins de sécurisation du domaine de sécurité. La liste de clés ou de fonctions sécurité suivante n'est pas exhaustive, mais, pour la sécurisation d'un domaine plusieurs clés peuvent être mises en oeuvre au sein d'un même keyset suivant les besoins de sécurité propres au domaine considéré. Ainsi, il peut exister une clé pour instancier des services dans le domaine de sécurité, une clé pour activer ces services, une clé pour authentifier les accès à ces services, une clé pour chiffrer les communications avec ces services et une clé pour modifier les paramètres du domaine de sécurité, c'est-à-dire pour modifier le contenu de la zone de données dudit domaine. Seule la connaissance de la bonne clé, ou d'un moyen d'accès à la bonne clé permet alors d'entreprendre l'action souhaitée. Suivant les modes de gestion des clés mis en oeuvre il peut y avoir un keyset dédié pour un domaine, pour un ensemble de cartes à microcircuit ou un keyset dédié pour le domaine identifié pour chacune des cartes à microcircuit de l'ensemble considéré.

Ces mécanismes permettent de garantir un bon cloisonnement des données entre les différents domaines de sécurité dans le cas où le système d'exploitation sous-jacent met en oeuvre le cloisonnement adéquat (notion de «firewalling» ou «sandbox» de Java).

Dans le cadre du monde de la carte à puce Java (JavaCard^{™}) et de la plate-forme «Global Platform» (http://www.globalplatform.org/), la notion de domaine de sécurité est ainsi proposée.

Une alternative à cette mise en oeuvre logicielle est d'utiliser une carte à puce dédiée émulant le fonctionnement d'un domaine de sécurité.

Dans une mise en oeuvre préférée, la mémoire 112 comporte donc un domaine de sécurité comportant des codes instruction correspondant à un serveur mandataire selon l'invention et des données correspondant d'une part à une configuration du serveur mandataire et d'autre part à des modules optionnels. Un module est une zone de mémoire comportant des codes instruction correspondant à des fonctions du serveur mandataire.

De par son inclusion dans un domaine 115 de sécurité le serveur mandataire et ses zones de données sont protégées par un keyset. Les clés de ce keyset ne sont alors connues que de l'opérateur de service fournissant la sécurité à l'abonné utilisant le terminal 101.

Par la suite le domaine de sécurité 115 est assimilé au serveur mandataire lui-même. En effet ce domaine de sécurité comporte au moins les codes instruction correspondant au serveur mandataire ainsi que les données de configuration du serveur mandataire.

Parmi les modules 117 possibles on cite au moins la protection contre les connexions entrantes en fonction de leurs adresses sources et ou de leurs ports destination et source, le filtrage de connexions sortantes en fonction de leurs adresses destination et ou de leurs ports destination et source, l'antivirus, les applicatifs de contrôle de syntaxe et de sémantique, l'établissement de connexions sécurisées par l'établissement d'un réseau privé virtuel (VPN) chiffré ou non avec ou sans authentification simple ou mutuelle le chiffrement/déchiffrement des données émises/reçues, la liste n'étant pas exhaustive, l'établissement et la gestion des différentes clés cryptographiques et certificats électroniques nécessaires à la délivrance des services cités ci-avant..

Les données 116 du domaine de sécurité 112 comportent au moins une table 117 permettant d'associer un flux 117a à un comportement 117b du serveur mandataire.

Un flux de données est caractérisé par un contexte réseau comportant au moins, dans le cas de communication IP, une adresse IP et un numéro de port. D'une manière exhaustive un flux peut aussi être identifié par deux adresses IP (source et destination), deux numéros de ports (source et destination) et un identifiant de protocole (port destination). On parle généralement du quintuplet qui permet d'identifier un flux. Les traitements sur les flux peuvent aussi être caractérisé par rapport à une notion temporelle ou de géolocalisation, il doit en effet être possible d'interdire certains flux sensibles lorsque le mobile se situe dans un pays étranger par exemple, ou lorsque que l'on souhaite communiquer en dehors des heures ouvrables des données hautement confidentielles alors que personne ne serait présent pour les collecter/traiter.

Dans une variante de mise en oeuvre le flux de données est caractérisé par une source et une destination au sein du terminal : un ensemble de fichiers de données stockés dans le terminal ou un composant logiciel ou matériel, et une opération à effectuer : (liste non exhaustive) lire, écrire, copier, détruire, compléter, ajouter, chiffrer/déchiffrer avec ou sans indication de clés, décompresser et de manière générale toutes les opérations couramment effectuées sur un fichier de données.

Un comportement est caractérisé par un identifiant de module dans la mémoire 117 et des paramètres pour ce module..

Chaque ligne de la mémoire 117 associe donc un flux avec un comportement pour ce flux.

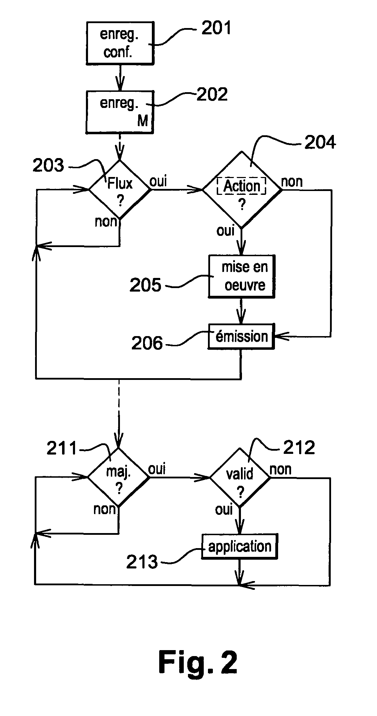

La figure 2 montre une étape 201 d'enregistrement d'une configuration du serveur mandataire. Dans cette étape la table 117 est mise à jour par un opérateur connaissant la clé de mise à jour du domaine 115. Le terminal 101 reçoit, via le réseau 108 ou une autre interface non décrite du terminal 101, des messages de mise à jour.

Ces messages comportent au moins un code instruction de mise à jour de la mémoire 117 et des données pour la mise à jour. Ce message de mise à jour peut être signé en utilisant la clé ad-hoc du keyset ce qui permet à la carte à puce de vérifier la validité du message de mise à jour, son origine (authentification) de contrôler son intégrité, voire de contrôler que la carte est le bon destinataire du message et d'en tenir compte si le message est valide. La prise en compte du message de mise à jour revient à utiliser les données du message de mise à jour pour mettre à jour la table 117.

Ici on observe un premier intérêt de l'invention. Il est en effet possible, pour un gestionnaire d'une flotte de terminaux de prévoir sur un serveur central une configuration de sécurité pour chaque terminal de la flotte de terminaux. Le serveur central comporte donc une base de données associant un utilisateur, à un keyset et à une configuration de sécurité. Lorsque que la configuration de sécurité est modifiée, le serveur émet automatiquement le message de configuration de sécurité, en utilisant les données et donc les droits associés du keyset de la carte à microcircuit du terminal considéré, vers le terminal dont la configuration de sécurité a été modifiée sur le serveur central.

Dans une variante, le serveur central peut gérer un ensemble d'applicatifs spécifiques pouvant être chargés dans les domaines de sécurité de la carte pour effectuer des traitements spécifiques à certains flux. Il est ainsi possible d'envisager la mise à jour régulière de ces applicatifs pour chacun des terminaux, de télécharger ou d'activer ceux ci s'ils sont déjà résident sur le ou les terminaux, de pousser une configuration de sécurité spécifique vers un terminal en fonction du profil de l'utilisateur dudit terminal et des usages plus ou moins sensibles de celui-ci.

Dans une variante préférée de l'invention il existe une configuration de sécurité par défaut qui est appliquée à tout nouveau terminal de la flotte ne comportant pas de configuration spécifique. Il est aussi possible de définir des groupes de terminaux. La modification de la configuration de sécurité du groupe provoque l'émission d'autant de messages de configuration que le groupe comporte de terminaux.

L'étape 201 peut en fait avoir lieu à n'importe quel moment, ce qui permet aussi de bloquer les communications d'un terminal via des règles très restrictives. La figure 2 montre aussi une étape 202 d'enregistrement d'une configuration de la mémoire 109. Cette étape de configuration comporte au moins l'enregistrement d'une adresse du serveur mandataire local. Cette configuration a pour effet de forcer tous les flux entrant et sortant du terminal101 à être traités par le serveur mandataire local.

Dans une variante préférée de l'invention le serveur mandataire est mis une oeuvre par une carte microcircuit. Cela est rendu pertinent par une évolution de la technique qui permet à une carte microcircuit d'accéder directement aux ressources de communication d'un terminal via les nouvelles technologies de carte dites BIP (Bearer Independent Protocol, pour porteur indépendant du protocole). Ces technologies permettent à la carte microcircuit d'accéder au réseau à haut débit.

Cette mise en oeuvre apporte une garantie supplémentaire au niveau de la mise en oeuvre de l'invention. En effet le réseau 107 est apte à identifier la source d'un flux selon qu'il vient d'une carte microcircuit ou directement d'un terminal. Dans le cadre du déploiement de l'invention, dans une variante préférée, le réseau 107 est configuré pour refuser les flux n'émanant pas d'une carte microcircuit. Cette configuration est facultative et peut ne concerner qu'une liste donnée de terminaux.

Dans une autre variante de l'invention la configuration de la mémoire 109 est soumise à la validation d'un mot de passe de manière à interdire le contournement du serveur mandataire.

Ainsi, est assurée une garantie raisonnable que tous les flux entrant/sortant du terminal 101 sont traités par le serveur mandataire mis en oeuvre par la carte 110.

Dans une variante préférée de l'invention la carte 110 est une carte SIM/USIM (Subscriber Identification Module, pour module d'identification d'abonné) d'un opérateur de téléphonie mobile qui est alors aussi opérateur de sécurité. Dans cette variante, il est simple pour un opérateur de réseau mobile gérant et maîtrisant ses propres cartes SIM/USIM, de déléguer certaines valeurs de keyset à des entités clientes utilisatrices d'un grand nombre de cartes SIM/USIM -notion de grand compte-. Ces grands comptes gèrent alors des flottes de terminaux et cartes SIM/USIM et peuvent mettre en oeuvre une entité gestionnaire de leurs flottes de mobile. Pour chacun de ces grands comptes, le gestionnaire de flotte a accès uniquement aux cartes SIM/USIM et aux domaines autorisés par l'opérateur au travers des keysets mis à sa disposition par l'opérateur. Cette mise à disposition pouvant prendre plusieurs formes, non limitatives de l'invention : un simple transfert sécurisé des valeurs de l'ensemble des keysets de sa flotte, un mécanisme de délégation au travers d'une plateforme de service de type web de l'opérateur dont l'accès est bien entendu sécurisé, voire un mécanisme de délégation sous le contrôle de l'opérateur sur une base cryptographique asymétrique intégré au sein des terminaux/cartes SIM/USIM. Ce gestionnaire de flotte du Grand Compte peut alors gérer facilement et sûrement les politiques de sécurité de chacun de ses terminaux/carte SIM aussi bien par l'usage de politique de sécurité par défaut que par la mise en place de politique sécurité spécifique suivant certains profils sensibles de sa flotte.

Dans d'autres variantes il s'agit d'une carte microcircuit dédiée ou non, ou d'un programme situé dans la mémoire 104, c'est-à-dire sans mise en oeuvre d'une carte microcircuit.

Le terminal 101 passe ensuite dans une étape 203 d'attente dans laquelle un processus surveille les événements que doit gérer le terminal 101 et en attribue la gestion à la bonne tâche. Dans ce cas, le terminal 101 se comporte comme n'importe quel système multitâche.

Dans l'étape 203, si une émission de flux est détectée, alors, selon la configuration de la mémoire 109, le terminal passe la main au serveur mandataire local.

Dans une étape 204, le serveur mandataire local, désigné après comme le proxy, prend en charge la gestion du flux. On prête donc des actions au proxy qui est ici assimilé à la carte 110. Dans la pratique la carte110 a aussi d'autres fonctions.

Dans une variante de l'invention, l'étape 203 est réalisée par le système d'exploitation qui détecte qu'un fichier ou système de fichiers de données va subir un traitement au niveau du terminal, le système d'exploitation identifie alors le type de flux et soumet ces informations ainsi que le flux au serveur mandataire lors de l'étape 204, celui-ci appliquant alors les traitements identifiés pour ce type de flux au niveau de la table 117 et passe à l'étape 205 et met en oeuvre ces traitements sur les fichiers de données avant de le remettre à disposition du destinataire au sein du terminal..

Dans l'étape 204 le proxy identifie le flux à traiter selon les informations que lui transfère le terminal 101. Ce flux est, pour les besoins de la description, soumis au proxy sous forme d'une succession de messages comportant une description du flux et les données du flux. La description du flux comporte au moins une adresse sur le réseau, ici IP, et un identifiant de port et/ou un identifiant de protocole.

Dans une variante de l'invention, le proxy a une connaissance de l'heure locale du terminal et prend en compte cette information une fois les traitements appliqués aux flux.

Dans une variante de l'invention, le proxy a une connaissance de la géolocalisation du terminal et prend en compte cette information une fois les traitements appliqués aux flux.

Cette description du flux permet au proxy de faire une recherche dans la table 117. Dans l'étape 204 le proxy recherche dans la table 117 une ligne dont les valeurs des champs correspondant à la colonne 117a sont égales aux valeurs décrivant le flux. Il s'agit donc de rechercher dans la colonne117a une adresse IP et un identifiant de port/protocole.

Si la recherche est fructueuse alors le proxy passe à une étape 205 de mise en oeuvre des actions correspondant à la ligne trouvée à l'étape 204. Sinon, c'est-à-dire si la recherche est infructueuse, le proxy passe à une étape 206 d'émission du flux.

Ici on note que la mémoire 117 peut comporter une ligne décrivant un comportement par défaut du proxy. Ce comportement par défaut peut être très restrictif, c'est-à-dire interdire l'émission/réception de tout flux ne correspondant pas à une autre ligne dans la table 117. Cette configuration par défaut est alors la dernière ligne de la table 117. La recherche d'une ligne dans la table s'arrête dès qu'une ligne correspondant au flux a été trouvée. Dans cette mise en oeuvre, et dans une autre, il est possible d'utiliser des «jokers» pour décrire tout ou partie d'une caractéristique d'un flux. Un «joker» est un caractère valant pour toute une série de caractères, par exemple, *-* (adresse-port) vaut pour tous les flux, *-80 vaut pour tous les flux http. 192.168.0, *-* vaut pour tous les flux sur le réseau 192.168.0.0/24, la liste n'étant pas exhaustive.

Dans l'étape 205 le proxy utilise les données de la colonne 117b correspondant à la ligne trouvée à l'étape 204 pour traiter les données du flux. Ces instructions sont, par exemple et de manière non limitative :
- bloquer le flux,
- laisser passer le flux,
- chercher et nettoyer les virus que pourrait contenir le flux,
- chiffrer/déchiffrer le flux,
- chiffrer/déchiffrer une partie du flux, en particulier dans le cas de flux de messagerie où il peut être intéressant de chiffrer les informations transportées mais pas les informations relatives au protocole de transport de ce message,
- établir/utiliser un tunnel pour émettre les données,
- émettre une trace identifiant et caractérisant la nature de la connexion établie, les caractéristques de cette connexion, les traitements réalisés par le serveur mandataire sur cette connexion, cette trace pouvant être conservée localement dans la carte SIM ou émise vers le mobile et/ou un serveur externe,...

Une fois le flux traité à l'étape 205 le proxy passe à l'étape 206 d'émission du flux par le proxy. Si le flux est bloqué, il n'est bien sur pas émis. L'émission est soit vers le terminal si le flux traité est un flux entrant dans le terminal, soit vers le réseau 108 s'il s'agit d'un flux émis par le terminal 101.

Dans une variante des étapes 203, 204 et 205, une table de session/contexte est mise en oeuvre par le serveur mandataire ou proxy de façon à mémoriser les décisions prises et les traitements effectués sur le flux de façon a optimiser les traitements ultérieurs sur le même flux. Il est en effet intéressant de garder au niveau d'une table de session/contexte la date du dernier paquet émis, la clé de chiffrement de la session en cours, l'état d'un «timer» de destruction du contexte en cas d'inactivité, les caractéristques du dernier paquet IP émis de façon à rendre plus efficace les traitements de sémantique réalisés par les applicatifs en charge du contrôle pour les paquets IP suivants émis ou reçus par le serveur mandataire.

Dans l'étape 106 le proxy émet les données du flux selon le traitement appliqué à l'étape 205. On note ici que le traitement, notamment un chiffrement, peut être délégué par la carte 110 au microprocesseur du terminal. Cela est pertinent car les capacités de traitement d'une carte microcircuit sont moindres que celles d'un terminal mobile. Dans ce cas précis, la carte microcircuit peut être chargée de l'établissement et de la gestion des clés, clés fournies via un canal sécurisé ou non (par exemple au travers de la mise en place du moyen JSR 177) à un applicatif du mobile en charge du chiffrement/déchiffrement à la volée du flux (par exemple dans la cadre de la mise en place de visiophonie chiffrée de bout en bout, indépendamment du réseau de rattachement).

Les étapes 204 à 206 sont totalement transparentes pour l'utilisateur du terminal 101. Pour lui, tout se passe comme sur un terminal normal, c'est-à-dire un terminal ne mettant pas en oeuvre l'invention. La figure 2 montre aussi une étape 211 correspondant en fait à l'étape 203. L'étape 211 illustre le fait que le terminal surveille aussi la réception d'un message de mise à jour de la mémoire 117 c'est-à-dire un message de mise à jour de la configuration du proxy. Si un tel message est détecté il est en fait directement traité par la carte 110 qui par la configuration du terminal 101 est serveur mandataire pour tous les flux reçus par le terminal 101.

La carte 110 passe donc à une étape 212 de vérification de la validité du message de configuration et applique la nouvelle configuration, dans une étape 213, selon le résultat de l'étape 212. Ce mécanisme a déjà été décrit pour l'étape 201. On rappelle juste ici que la vérification de la validité s'appuie sur les mécanismes de lecture/écriture du domaine de sécurité. Le message de configuration est donc envoyé au terminal après l'établissement d'une connexion entre un serveur et le terminal, à l'initiative du serveur. Il s'agit de "pousser" (utilisation des technologies de type PUSH) le fichier de configuration dans le terminal et plus particulièrement dans sa carte microcircuit.

La figure 1 montre un serveur 121 connecté au réseau 108. Ce serveur comporte au moins des moyens de communication et au moins, de manière simplifiée :
- une mémoire 122 de configuration permettant d'associer un identifiant d'un terminal mobile, par exemple un numéro d'identification du terminal ou numéro de série unique de celui-ci (typiquement un numéro IMEI dans le cadre d'un téléphone mobile) un numéro IMSI (International Mobile Subscriber Identity pour identité internationale de l'abonné mobile) ou un numéro de téléphone (MSISDN) à un identifiant de flux et à un identifiant de comportement, c'est-à-dire en fait à une ligne telle qu'une des lignes de la mémoire 117. La mémoire 122 peut comporter plusieurs lignes associant le même numéro IMSI à plusieurs couples [identifiant de flux, identifiant de comportement],
- une mémoire 123 permettant d'associer un identifiant d'un terminal à des paramètres de sécurité, par exemple un keyset,
- une mémoire 124 comportant des codes instruction pour produire un message de configuration à partir des contenus des mémoires 122 et 123.

Le serveur 121 a la charge de la synchronisation des mémoires 117 avec le contenu de la mémoire 122.

Les identifiants des mémoires 122 et 123 sont de même nature et correspondent à un identifiant enregistré dans une mémoire 118 de la carte110 microcircuit.

Dans un variante de l'invention, il est possible au travers de la saisie d'un mot de passe, contrôlé par le serveur mandataire, pour l'utilisateur de modifier ou de compléter, voire d'inactiver certaines lignes de la table 117.

Dans une variante de l'invention, le serveur mandataire est capable de gérer, conserver ou d'émettre vers le terminal et / ou un serveur externe pouvant être spécifié, un historique détaillé de l'ensemble des actions de configuration mises à jour réalisées sur la table 117.

Grâce à l'invention, il est donc possible de gérer la sécurité des communications issues et à destination d'un terminal mobile. Cela inclut les communications vocales et visiophonie car les terminaux mobiles sont aptes à établir des communications dites de voix sur IP (VoIP). Cette gestion est de plus sécurisée par la protection via des mécanismes de sécurité, liés à un domaine de sécurité, de la configuration de l'application permettant la gestion de cette sécurité. Cette sécurité est, par les mêmes mécanismes de lecture/écriture du domaine de sécurité, gérée de façon centralisée via un serveur produisant et diffusant les configurations.

Grâce à l'invention, les opérateurs de réseau mobile peuvent proposer des services de sécurité de bout en bout, intrinsèque à leurs réseaux au travers de la mise en place de l'invention au niveau des cartes SIM/USIM et indépendamment des applications du terminal en utilisant un serveur mandataire de la carte SIM/USIM ne s'appuyant que sur les protocoles et flux transmis sur le réseau. Cette sécurisation étant portée par la carte SIM/USIM de l'opérateur elle devient alors indépendante du réseau de transport et est opérationnelle même lorsque le terminal/carte SIM/USIM est en situation de «roaming» à l'étranger. Il devient alors possible pour les utilisateurs d'obtenir de façon automatique des services de sécurité aussi intéressants que l'authentification mutuelle à base de challenges cryptographiques d'interlocuteurs sur une base de téléphonie sur IP via les protocoles SIP ou H323 et de garantir par exemple une qualité de chiffrement de bout en bout et cela indépendamment de la qualité des applicatifs utilisés par le terminal. Un gestionnaire de flotte ayant reçu en délégation de l'opérateur les keysets de ses terminaux/cartes SIM/USIM peut aussi garantir un niveau de confidentialité/chiffrement de bout en bout quelle que soit la qualité et indépendamment de la présence ou non de codes malicieux au sein des applicatifs utilisés par le terminal (seul certains flux étant acheminés chiffrés par le serveur mandataire les autres étant interdits par le serveur mandataire). Un autre avantage immédiat de l'invention est la possibilité pour le gestionnaire de flotte de pouvoir pousser son propre applicatif de chiffrement au sein de l'ensemble des cartes SIM/USIM de sa flotte et le pilotage de cet applicatif au travers des mécanismes mis en place.

## Revendications

1. Procédé de traitement d'un flux de données émis par un terminal (101) électronique, **caractérisé en ce que** le traitement est obtenue via un serveur mandataire (115) hébergé dans une carte à microcircuit insérée dans le terminal électronique, et **en ce que** le procédé comporte les étapes suivantes mises en oeuvre par le terminal électronique :
- enregistrement (201) d'une configuration du serveur mandataire dans une mémoire de configuration de la carte à microcircuit, ladite étape d'enregistrement étant conditionnée par la validation d'une étape de vérification des droits de mise à jour d'un émetteur de la requête d'enregistrement,
- enregistrement (202), dans une mémoire de configuration de protocoles, d'un paramètre forçant l'utilisation du serveur mandataire pour chaque flux de données d'au moins un protocole,
- application (204-206), par le serveur mandataire mis en oeuvre dans la carte à microcircuit pour chaque flux de données de chaque protocole paramétré, d'un traitement prévu pour le flux par la configuration dudit serveur mandataire.

2. Procédé selon la revendication 1 **caractérisé en ce que** le traitement prévu est réalisé par un applicatif spécifique dédié.

3. Procédé selon la revendication 1 ou 2 **caractérisé en ce que** le traitement prévu est réalisé par un serveur spécialisé en relation avec le serveur mandataire.

4. Procédé selon l'une des revendications 1 à 3 **caractérisé en ce que** la mémoire de configuration de la carte à microcircuit est mise à jour via une étape (213) de mise à jour suivant une étape de connexion à distance sur le terminal électronique comportant ladite mémoire de configuration de la carte à microcircuit.

5. Procédé selon l'une des revendications 1 à 4 **caractérisé en ce que** la mémoire de configuration de la carte à microcircuit est mise à jour via une étape (213) de mise à jour suivant une étape de connexion en local sur le terminal électronique comportant ladite carte à microcircuit, cette étape de connexion comportant une phase d'authentification d'un utilisateur contrôlée par le serveur mandataire.

6. Procédé selon l'une des revendications 1 à 5 **caractérisé en ce que** les applicatifs en charge des traitements prévus pour chacun des flux identifiés par la configuration du serveur mandataire sont mis à jour selon les mêmes procédés que ceux mis en place pour la mise à jour de la mémoire de configuration de la carte à microcircuit.

7. Procédé selon l'une des revendications 1 à 6, **caractérisé en ce que** le traitement prévu pour chacun des flux de données de chaque protocole paramétré prend en compte les informations relatives à l'heure d'usage.

8. Procédé selon !'une des revendications 1 à 7, **caractérisé en ce que** le traitement prévu pour chacun des flux de données de chaque protocole paramétré prend en compte la connaissance de la géolocalisation du terminal.

9. Procédé selon l'une des revendications 1 à 8, **caractérisé en ce que** le traitement prévu pour chacun des flux de données de chaque protocole paramétré prend en compte les informations relatives aux derniers flux traités.

10. Procédé selon la revendication 2 **caractérisé en ce que** les applicatifs spécifiques dédiés au traitement prévu sont téléchargés dans la carte à microcircuit ou activés s'ils y sont déjà résidents.

11. Procédé selon les revendications 1 à 10 **caractérisé en ce qu'**il existe une configuration de sécurité par défaut qui est appliquée à tout nouveau terminal d'une flotte ne comportant pas de configuration spécifique.

12. Procédé selon l'une des revendications 1 à 11, **caractérisé en ce que** le paramètre forçant l'utilisation du serveur mandataire est l'adresse IP dudit serveur mandataire hébergé dans la carte à microcircuit.

13. Procédé selon l'une des revendications 1 à 12, **caractérisé en ce que** la carte à microcircuit est une carte SIM/USIM.

## Patentansprüche

1. Verfahren zur Behandlung eines Datenflusses, der von einem elektronischen Terminal (101) ausgesendet wird, **dadurch gekennzeichnet, dass** man die Behandlung über einen beauftragten Server (115) erhält, der in einer Mikrochipkarte untergebracht ist, die in einen elektronischen Terminal eingelegt ist, und dadurch, dass das Verfahren die folgenden Schritte umfasst, die vom elektronischen Terminal ausgeführt werden:
- das Speichern (201) einer Konfiguration des beauftragten Servers in einem Konfigurationsspeicher der Mikrochipkarte, wobei der besagte Schritt des Speicherns von der Validierung eines Überprüfungsschrittes der Aktualisierungsrechte eines Senders des Speicherauftrags abhängt,
- das Speichern (202) in einem Protokollkonfigurationsspeicher eines Parameters, der die Verwendung des beauftragten Servers für jeden Datenfluss zumindest eines Protokolls forciert,
- die Anwendung (204-206) einer durch die Konfiguration des besagten beauftragten Servers für den Fluss vorgesehenen Behandlung durch den auf der Mikrochipkarte eingesetzten beauftragten Server auf jeden Datenfluss eines jeden parametrierten Protokolls.

2. Verfahren nach Anspruch 1, **dadurch gekennzeichnet, dass** die vorgesehene Behandlung durch eine eigens dafür bestimmte Anwendungssoftware ausgeführt wird.

3. Verfahren nach Anspruch 1 oder 2, **dadurch gekennzeichnet, dass** die vorgesehene Behandlung durch einen Server ausgeführt wird, der auf das Verhältnis mit dem beauftragten Server spezialisiert ist.

4. Verfahren nach einem der Ansprüche 1 bis 3, **dadurch gekennzeichnet, dass** der Konfigurationsspeicher der Mikrochipkarte durch einen Aktualisierungsschritt (213) nach einem Schritt der Fernverbindung mit dem elektronischen Terminal aktualisiert wird, der den besagten Konfigurationsspeicher der Mikrochipkarte enthält.

5. Verfahren nach einem der Ansprüche 1 bis 4, **dadurch gekennzeichnet, dass** der Konfigurationsspeicher der Mikrochipkarte durch einen Aktualisierungsschritt (213) nach einem Schritt einer lokalen Verbindung mit dem elektronischen Terminal aktualisiert wird, der den besagten Konfigurationsspeicher der Mikrochipkarte enthält, wobei dieser Verbindungsschritt eine Authentisierungsphase eines Benutzers umfasst, die durch den beauftragten Server kontrolliert wird.

6. Verfahren nach einem der Ansprüche 1 bis 5, **dadurch gekennzeichnet, dass** die Anwendungssoftwares, die die für jeden der durch die Konfiguration des beauftragten Servers identifizierten Flüsse vorgesehenen Behandlungen ausführen, gemäß denselben Verfahren aktualisiert werden, wie jene, die zur Aktualisierung des Konfigurationsspeichers der Mikrochipkarte eingesetzt werden.

7. Verfahren nach einem der Ansprüche 1 bis 6, **dadurch gekennzeichnet, dass** die für jeden der Datenflüsse eines jeden parametrierten Protokolls vorgesehene Behandlung die Informationen bezüglich der Uhrzeit der Anwendung berücksichtigt.

8. Verfahren nach einem der Ansprüche 1 bis 7, **dadurch gekennzeichnet, dass** die für jeden der Datenflüsse eines jeden parametrierten Protokolls vorgesehene Behandlung die Kenntnis der Geolokalisierung des Terminals berücksichtigt.

9. Verfahren nach einem der Ansprüche 1 bis 8, **dadurch gekennzeichnet, dass** die für jeden der Datenflüsse eines jeden parametrierten Protokolls vorgesehene Behandlung die Informationen bezüglich der zuletzt behandelten Flüsse berücksichtigt.

10. Verfahren nach Anspruch 2, **dadurch gekennzeichnet, dass** die spezifischen und der vorgesehenen Behandlung gewidmeten Anwendungssoftwares auf die Mikrochipkarte heruntergeladen, oder, wenn sie bereits vorhanden sind, aktiviert werden.

11. Verfahren nach den Ansprüchen 1 bis 10, **dadurch gekennzeichnet, dass** eine standardgemäß vorgesehene Sicherheitskonfiguration existiert, die auf jeden neuen Terminal einer Flotte angewandt wird, die keine spezifische Konfiguration enthält.

12. Verfahren nach einem der Ansprüche 1 bis 11, **dadurch gekennzeichnet, dass** der Parameter, der die Verwendung des beauftragten Servers forciert, die IP Adresse des besagten beauftragten Servers ist, der auf der Mikrochipkarte untergebracht ist.

13. Verfahren nach einem der Ansprüche 1 bis 12, **dadurch gekennzeichnet, dass** die Mikrochipkarte eine SIM/USIM Karte ist.

## Claims

1. A method of processing a flow of data sent by an electronic terminal (101), **characterised in that** the processing is achieved via an proxy server (115), hosted in a microcircuit board inserted in the electronic terminal, and **in that** the method includes the following steps implemented by the electronic terminal:
- recording (201) of a proxy server configuration in a configuration memory of the microcircuit board, said recording step being conditioned by the validation of a step of checking updating rights of a sender of the recording request,
- recording (202), in a protocol configuration memory, of a parameter forcing the use of the proxy server for each flow of data of at least one protocol,
- application (204-206), by the proxy server implemented in the microcircuit board for each flow of data of each configured protocol of a processing, planned for the flow by the configuration of the said proxy server.

2. A method according to claim 1, **characterised in that** the planned processing is performed by a dedicated specific application software.

3. A method according to claim 1 or 2, **characterised in that** the planned processing is performed by a specialised server in relation with the proxy server.

4. A method according to one of the claims 1 to 3, **characterised in that** the configuration memory of the microcircuit board is updated via an updating step (213) following a step of remote connection to the electronic terminal comprising said configuration memory of the microcircuit board.

5. A method according to one of claims 1 to 4, **characterised in that** the configuration memory of the microcircuit board is updated via an updating step (213) following a step of local connection to the electronic terminal comprising said microcircuit board, this connection step comprising a user authentication phase controlled by the proxy server.

6. A method according to one of claims 1 to 5, **characterised in that** the applications used for the planned processes for each of the flows identified by the configuration of the proxy server are updated in accordance with the same methods as those implemented for updating of the configuration memory of the microcircuit board.

7. A method according to one of claims 1 to 6, **characterised in that** the planned processing for each one of the flows of data of each configured protocol takes into account information relating to the time of use.

8. A method according to one of claims 1 to 7, **characterised in that** the planned processing for each of the flows of data of each configured protocol takes into account the geolocation knowledge of the terminal.

9. A method according to one of claims 1 to 8, **characterised in that** the planned processing for each of the flows of data of each configured protocol takes into account information relating to the last flows processed.

10. A method according to claim 2, **characterised in that** the specific applications dedicated to the planned processing are downloaded onto the microcircuit board, or are activated if they are already embedded in there.

11. A method according to claims 1 to 10, **characterised in that** there is a default security configuration which is applied to any new terminal of a fleet not comprising a specific configuration.

12. A method according to one of claims 1 to 11, **characterised in that** the parameter forcing the use of the proxy server is the IP address of the said proxy server hosted in the microcircuit board.

13. A method according to one of claims 1 to 12, **characterised in that** the microcircuit board is a SIM/USIM board.
